# EUROPEAN PATENT SPECIFICATION

(11) **EP 0 883 903 B1**
(45) Date of publication and mention of the grant of the patent: **07.06.2006**
(21) Application number: 97906108.2
(22) Date of filing: 21.02.1997
(51) Int. Cl.: H01M 6/00, H01M 4/42, H01M 4/62, H01M 4/06, H01M 4/12, H01M 6/06

(54) **PROCESS FOR MANUFACTURING A PRIMARY ZINC-ALKALINE BATTERY AND ANODE MIX USED THEREIN**
VERFAHREN ZUR HERSTELLUNG PRIMÄRER ZINK-ALKALI-BATTERIEN UND DABEI BENUTZTES ANODENMIX
PROCEDE DE FABRICATION D'UNE BATTERIE ALCALINE AU ZINC PRIMAIRE ET MELANGE ANODIQUE UTILISE DANS CETTE DERNIERE

(30) Priority: 22.02.1996 EP 96200462
(43) Date of publication of application: 16.12.1998
(73) Proprietor: Umicore, 1000 Brussels (BE)
(72) Inventor: STRAUVEN, Yvan, B-3580 Neerpelt (BE)
(74) Representative: Saelemaekers, Juul
(86) International application number: PCT/EP1997/000846
(87) International publication number: WO 1997/031397

(56) References cited:
- WO-A-94/19502
- US-A- 5 206 096
- "Römpp Chemie Lexikon" GEORG THIEME VERLAG , STUTTGART * page 585 *

## Description

The present invention relates to a process for manufacturing a primary zinc-alkaline battery, which comprises the step of preparing a gelled alkaline anode mix containing an aluminiferous zinc alloy powder as an active material.

A primary zinc-alkaline battery, e.g. of the type LR6, is usually composed of an annular cathode compound, a gel-like anode called anode mix, a separator paper located between the cathode and the anode, a current collector for the anode, a metal case surrounding the cathode, an outer housing surrounding the metal case, a plug for closing the opening of the metal case, a bottom plate forming the anode terminal and possibly a cathode terminal cap (see e.g. EP-A-0457354). According to WO-A-94-19502 the presence of Al in a zinc alloy powder for alkaline batteries enhances the resistance of the powder to corrosion in the electrolyte of the battery, especially after partial discharging of the latter. However, according to the same document the presence of Al also increases the tendency of the battery to develop short-circuits. That's why WO-A-94-19502 proposes to restrict the Al content of the powder to 1-95 ppm. It has been found now by the Applicant that even powders with 1-95 ppm Al still might give rise to short-circuits in some battery applications, especially when one or more of the following conditions prevail : the battery is small, e.g. of the LR6 type; a particular periodic discharge scheme is applied ; a rather porous separator paper is used.

The aim of the present invention is to provide a process such a defined hereinbefore, which diminishes the possible detrimental influence of the battery size, the discharge conditions and the separator porosity on the tendency of the battery to develop short-circuits and which moreover allows to use higher Al contents without inducing an unacceptable tendency to develop short-circuits.

According to the invention, this aim is achieved by using a calcium compound as an ingredient of the anode mix in a sufficient amount to lower the tendency the battery shows to develop short-circuits when the calcium compound is absent in its anode mix.
The invention is based on the discovery that the presence of a calcium compound such as e.g. Ca(OH)₂ in the anode mix neutralizes the detrimental influence of the Al contained in the powder upon the tendency of the battery to develop short-circuits, as will be shown later.
It should be noted here that JP-A-63138395 discloses a process for manufacturing a primary zinc-alkaline battery comprising dispersing an aluminiferous zinc alloy powder and calcium plumbate (Ca₂PbO₄) in a gelled alkaline electrolyte, the calcium plumbate being added as a corrosion inhibitor for the zinc alloy powder. Consequently, the Applicant waives protection for the use of calcium plumbate as a calcium compound in the process of the present invention.

US-A-4312931 discusses the addition of Calcium silicate to zinc electrodes for secondary alkaline cells. It is said that while this addition avoids the redeposition of zinc during the charge/discharge cycling of the battery, the required amount significantly thickens the electrode and therefore lowers the energy density of the cells. Furthermore, no mention is made of any effect on the short-circuit behavior.

EP-A-0582293 discloses the addition of an hydroxide of alkaline earth metal, specifically of Ba(OH)₂, to electrolyte for primary alkaline cells. It is said that the function of this addition is not certain, but that it provides in the suppression of hydrogen and in the improvement of unspecified electric characteristics. No mention is made of any effect on the short-circuit behavior. Moreover, as will be shown later, Ba(OH)₂ has no effect on the tendency of the battery to develop short-circuits.

The calcium compound is preferably used in such an amount that the anode mix contains at least 0.001 wt% Ca as a compound based on the weight of the alloy powder ; otherwise, the tendency of the battery to develop short-circuits is in many cases not substantially lowered. A calcium content of at least 0.005 wt% is still more preferred and the most preferred minimum content of Ca as a compound is 0.01 wt%.
It is not recommended to add more that 2 wt% Ca as a compound. It is preferable to add no more that 1 wt%, preferably no more than 0.45 wt%, and still more preferable to add no more than 0.1 wt% Ca.

Any calcium compound can be used such as those described in "Nouveau Traité de Chimie Minérale, Paul Pascal, Tome IV, Masson et Cie, Editeurs, Paris 1958", pages 299-545, but the preference is given to Ca(OH)₂, CaO and calcium compounds that are less stable in the electrolyte than Ca(OH)₂, i.e. calcium compounds that react with the electrolyte to form Ca(OH)₂.

In addition to the alkaline electrolyte, gelling agent, alloy powder and calcium compound, the anode mix may also contain organic and/or inorganic corrosion inhibitors such as e.g. In(OH)₃ or In₂O₃.

The aluminiferous zinc alloy powder contains advantageously, in addition to zinc SHG (Special High Grade) and Al, at least one of the elements Pb, Bi, In, Ga so as to have an increased resistance to corrosion in the electrolyte, the content of Al and of the other element(s) in the powder ranging preferably from 0.001 wt% to 0.5 wt%, more preferably from 0.002 wt% to 0.1 wt%, and still more preferably from 0.005 wt% to 0.1 wt%.
The powder may be composed of the said elements, in which case it contains, in addition to Zn, Al and one or more of Pb, Bi, In and Ga, only unavoidable impurities.

The powder may also contain other elements that improve its corrosion resistance such as e.g. Ca in an amount of 0.001-0.1 wt%.
The powder is advantageously free from added toxic elements such as mercury, cadmium, thallium and lead.
Aluminiferous zinc alloy powders that can be used in the process of the present invention are disclosed a.o. in EP-A-0427315, EP-A-0457354, WO-A-94-19502. JP-A-63138395, EP-B-0500313, JP-A-61077259, US-A-4735876, JP-A-62040162 and JP-A-62123654.

The present invention relates also to an anode mix for a primary zinc-alkaline battery, comprising a dispersion of an aluminiferous zinc alloy powder as an active material in a gelled alkaline electrolyte, characterized in that the electrolyte contains also a calcium compound in a sufficient amount to lower the tendency the anode mix without the calcium compound shows to develop a short-circuit in the battery, wherein it is used.
Because of the disclosure in the above discussed JP-A-63138395 the Applicant waives protection for an anode mix obtained by using calcium plumbate as an ingredient of the mix. Preferred compositions of the anode mix according to the invention are subject of the enclosed claims 11-15.

When carrying out the process of the present invention, it is convenient to prepare firstly an intimate mixture of the aluminiferous zinc alloy powder, the calcium compound and optionally the gelling agent, and to use this mixture as an ingredient of the anode mix.

In a variant of the process of the present invention, the calcium compound is incorporated with the separator paper, instead of being incorporated with the anode mix. Therefore, the present invention also relates to a process for manufacturing a primary zinc-alkaline battery, which comprises the steps of (a) preparing a gelled alkaline anode mix containing an aluminiferous zinc alloy powder as an active material, and (b) providing a separator paper between the anode mix and a cathode compound, characterized in that the separator paper contains a calcium compound in a sufficient amount to lower the tendency the battery shows to develop a short-circuit when the calcium compound is absent in the paper.

The process of the invention is illustrated by the following example.

A zinc alloy powder containing 500 ppm Bi, 500 ppm In and 70 ppm Al, is intimately mixed with powdered Ca(OH)₂, in such ratios as to obtain mixed powders with Ca concentrations of 50, 100 and 250 ppm. Also, the zinc alloy powder without any addition of Ca is used as a reference.

A number of batteries of LR6 and LR14 type is produced using these powders. For each battery, a gel-like anode mix is prepared consisting of 68 % mixed powder, 0.5 % gelling agent (Carbopol® 941 from Goodrich) and 31.5 % electrolyte consisting of 38 % KOH, 2.9 % ZnO and 59.1 % H₂O. A separator paper of the type FS2182 from Freudenberg (Germany) is used and a MnO₂ cathode.

The capacity and the gassing characteristics of the corresponding batteries were measured and are summarized in table 1 hereafter. Procedures and results are discussed below.

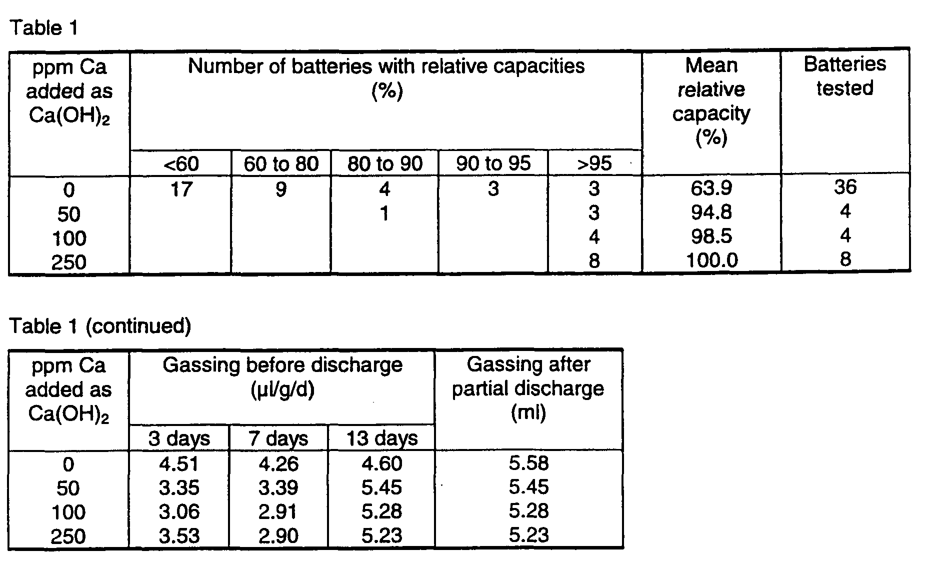

Capacity tests are performed on the LR6 type batteries, subjecting them to a periodic discharge scheme of 1 hour every 12 hours, over a 10 ohm resistor. This discharge scheme is continued until the cell voltage drops below 0.9 V. The capacity of the battery is represented by the total discharge time.

Some batteries display an unusually low observed capacity due to short-circuits. This is evidenced by a sudden decrease in voltage and is corroborated by visual inspection of the battery contents. The relative capacity as mentioned in Table 1 is the ratio of the actual capacity to the capacity when no short-circuits occur. A relative capacity of less than 90 % is considered to be caused by short-circuits.

The example shows that frequent short-circuits occur when using the reference powder, thus when no Ca compound is added. An amount of 50 ppm Ca in the mixed powder proves to be sufficient to inhibit the formation of most short-circuits. An amount of 100 ppm or 250 ppm Ca completely suppresses the occurrence of short-circuits.

Gassing tests before discharge are performed on a mixture of 25 g mixed powder and 160 ml electrolyte consisting of 38 % KOH, 2 % ZnO and 60 % H₂O. This mixture is maintained at 45°C. The resulting gas production is expressed as µl of gas produced per g mixed powder per day.

Gassing tests after partial discharge are performed on LR14 type batteries. The batteries are first discharged for 6 h over 2.2 ohm, and then maintained for 7 days at 71 °C. The resulting gas production is expressed as ml of gas per battery.

It is found that both gassing tests give satisfactory results and are essentially unaffected by the addition of the Ca compound to the zinc alloy powder.

A comparison is made using the same zinc alloy powder as in the example above, i.e. containing 500 ppm Bi, 500 ppm In and 70 ppm Al. This powder is intimately mixed with powdered Mg(OH)₂, Ba(OH)₂ or Sr(OH)₂, in such ratios as to obtain mixed powders with alkaline earth concentrations of 50, 100 and 250 ppm. The results of the same capacity tests as described above are shown in tables 2, 3 and 4. The mean relative capacities all lie well below 90 %, indicating that the tendency to develop short-circuits is not suppressed. The clear beneficial effect of Ca is thus not obtained with hydroxides of other common alkaline earth metals.

**Table 2**

| ppm Mg added as Mg(OH)₂ | Number of batteries with relative capacities (%) | | | | | Mean relative capacity (%) | Batteries tested |
|---|---|---|---|---|---|---|---|
| | <60 | 60 to 80 | 80 to 90 | 90 to 95 | >95 | | |
| 0 | 17 | 9 | 4 | 3 | 3 | 63.9 | 36 |
| 50 | 1 | | 1 | | 2 | 81.3 | 4 |
| 100 | 2 | 1 | | | 1 | 62.5 | 4 |
| 250 | 1 | | 1 | | 2 | 81.3 | 8 |

**Table 3**

| ppm Ba added as Ba(OH)₂ | Number of batteries with relative capacities (%) | | | | | Mean relative capacity (%) | Batteries tested |
|---|---|---|---|---|---|---|---|
| | <60 | 60 to 80 | 80 to 90 | 90 to 95 | >95 | | |
| 0 | 17 | 9 | 4 | 3 | 3 | 63.9 | 36 |
| 50 | 1 | | | 1 | 2 | 83.1 | 4 |
| 100 | 1 | | 1 | | 2 | 81.3 | 4 |
| 250 | 5 | 1 | | 1 | 1 | 57.8 | 8 |

**Table 4**

| ppm Sr added as Sr(OH)₂ | Number of batteries with relative capacities (%) | | | | | Mean relative capacity (%) | Batteries tested |
|---|---|---|---|---|---|---|---|
| | <60 | 60 to 80 | 80 to 90 | 90 to 95 | >95 | | |
| 0 | 17 | 9 | 4 | 3 | 3 | 63.9 | 36 |
| 50 | 2 | | 1 | | 2 | 73.0 | 4 |
| 100 | 1 | 1 | | | 2 | 77.5 | 4 |
| 250 | 2 | 1 | | | 1 | 62.5 | 8 |

## Claims

1. A process for manufacturing a primary zinc-alkaline battery, which comprises the step of - preparing a gelled alkaline anode mix containing an aluminiferous zinc alloy powder as an active material, **characterized in that** a powdered calcium compound is used as an ingredient of the anode mix in such an amount that the anode mix contains at least 0.001 wt% Ca based on the weight of the alloy powder, being excluded the use of calcium plumbate as a calcium compound.

2. A process according to claim 1, **characterized in that** the anode mix contains at least 0.005 wt% Ca as a compound, preferably at least 0.01 wt%.

3. A process according to claim 1 or 2, **characterized in that** the calcium compound is used in such an amount that the anode mix contains no more than 2 wt% Ca as a compound, preferably no more than 1 wt%.

4. A process according to any of the claims 1-3, **characterized in that** the calcium compound is used in such an amount that the anode mix contains no more than 0.45 wt% Ca as a compound, preferably no more than 0.1 wt%.

5. A process according to any of the claims 1-4, **characterized in that** the calcium compound is Ca(OH)₂, CaO or a calcium compound that is less stable than Ca(OH)₂ in the electrolyte.

6. A process according to any of the claims 1-5, **characterized in that** the aluminiferous zinc alloy powder contains, in addition to zinc SHG and Al, at least one of the elements Pb, Bi, In, Ga, its content of Al and the other element(s) ranging from 0.001 to 0.5 wt%, more preferably from 0.002 wt% to 0.1 wt%, and still more preferably from 0.005 wt% to 0.1 wt%.

7. A process according to claim 6, **characterized in that** the other constituents of the powder are unavoidable impurities.

8. A process according to claim 6 or 7, **characterized in that** the powder is free from added mercury, cadmium, thallium and lead.

9. An anode mix for a primary zinc-alkaline battery, comprising a dispersion of an aluminiferous zinc alloy powder as an active material in a gelled alkaline electrolyte, **characterized in that** the electrolyte contains also a calcium compound in such an amount that the anode mix contains at least 0.001 wt% Ca based on the weight of the alloy powder.

10. An anode mix according to claim 9, **characterized in that** it contains 0.001-2 wt% Ca as a compound based on the weight of the alloy powder.

11. A anode mix according to claim 9 or 10, **characterized in that** the calcium compound is Ca(OH)₂ or CaO.

12. An anode mix according to claim 9, 10 or 11, **characterized in that** the aluminiferous zinc alloy powder contains, in addition to zinc SHG and Al, at least one of the elements Pb, Bi, In, Ga, its content of Al and the other element(s) ranging from 0.001 to 0.5 wt%, more preferably from 0.002 wt% to 0.1 wt%, and still more preferably from 0.005 wt% to 0.1 wt%.

13. An anode mix according to claim 12, **characterized in that** the other constituents of the powder are unavoidable impurities.

14. An anode mix according to claim 12 or 13, **characterized in that** the powder is free from added mercury, cadmium, thallium and lead.

15. A product for use in the manufacturing of a primary zinc-alkaline battery, said product comprising an aluminiferous zinc alloy powder, **characterized in that** it is composed of an intimate mixture of said alloy powder and of a powdered calcium compound, the mixture containing 0.001-2 wt% Ca as a compound based on the weight of the alloy powder, being excluded a mixture containing calcium plumbate as a calcium compound.

16. A product according to claim 15, **characterized in that** the calcium compound is Ca(OH)₂, CaO or a calcium compound that is less stable than Ca(OH)₂ in the electrolyte of the battery.

17. A process for manufacturing a primary zinc-alkaline battery, which comprises the steps of
a) preparing a gelled alkaline anode mix containing an aluminiferous zinc alloy powder as an active material, and
b) providing a separator paper between the anode mix and a cathode compound, **characterized in that** the separator paper contains a calcium compound in such an amount that the separator paper contains at least 0.001 wt% Ca based on the weight of the alloy powder.

18. A process according to claim 17, **characterized in that** the calcium compound is Ca(OH)₂, CaO or a calcium compound that is less stable than Ca(OH)₂ in the electrolyte.

## Patentansprüche

1. Verfahren zur Herstellung einer Zink-Alkali-Primärbatterie, bei dem man eine gelierte alkalische Anodenmischung herstellt, die als Aktivmasse ein aluminiumhaltiges Zinklegierungspulver enthält, **dadurch gekennzeichnet, daß** man als Bestandteil der Anodenmischung eine pulverförmige Calciumverbindung in einer solchen Menge verwendet, daß die Anodenmischung mindestens 0,001 Gew.-% Ca, bezogen auf das Gewicht des Legierungspulvers, enthält, wobei die Verwendung von Calciumplumbat als Calciumverbindung ausgeschlossen ist.

2. Verfahren nach Anspruch 1, **dadurch gekennzeichnet, daß** die Anodenmischung mindestens 0,005 Gew.-% Ca in Form einer Verbindung enthält, vorzugsweise mindestens 0,01 Gew.-%.

3. Verfahren nach Anspruch 1 oder 2, **dadurch gekennzeichnet, daß** man die Calciumverbindung in einer solchen Menge verwendet, daß die Anodenmischung höchstens 2 Gew.-% Ca in Form einer Verbindung enthält, vorzugsweise höchstens 1 Gew.-%.

4. Verfahren nach einem der Ansprüche 1-3, **dadurch gekennzeichnet, daß** man die Calciumverbindung in einer solchen Menge verwendet, daß die Anodenmischung höchstens 0,45 Gew.-% Ca in Form einer Verbindung enthält, vorzugsweise höchstens 0,1 Gew.-%.

5. Verfahren nach einem der Ansprüche 1-4, **dadurch gekennzeichnet, daß** es sich bei der Calciumverbindung um Ca(OH)₂, CaO oder eine Calciumverbindung, die in dem Elektrolyt weniger stabil ist als Ca(OH)₂, handelt.

6. Verfahren nach einem der Ansprüche 1-5, **dadurch gekennzeichnet, daß** das aluminiumhaltige Zinklegierungspulver neben SHG-Zink und Al mindestens eines der Elemente Pb, Bi, In und Ga enthält, wobei dessen Gehalt an Al und dem anderen Element bzw. den anderen Elementen im Bereich von 0,001 bis 0,5 Gew.-%, besonders bevorzugt von 0,002 bis 0,1 Gew.-% und noch weiter bevorzugt von 0,005 bis 0,1 Gew.-% liegt.

7. Verfahren nach Anspruch 6, **dadurch gekennzeichnet, daß** es sich bei den anderen Bestandteilen des Pulvers um unvermeidliche Verunreinigungen handelt.

8. Verfahren nach Anspruch 6 oder 7, **dadurch gekennzeichnet, daß** das Pulver frei von Quecksilber- , Cadmium-, Thallium- und Bleizusätzen ist.

9. Anodenmischung für eine Zink-Alkali-Primärbatterie, umfassend eine Dispersion eines aluminiumhaltigen Zinklegierungspulvers als Aktivmasse in einem gelierten alkalischen Elektrolyt, **dadurch gekennzeichnet, daß** der Elektrolyt auch eine Calciumverbindung in einer solchen Menge enthält, daß die Anodenmischung mindestens 0,001 Gew.-% Ca, bezogen auf das Gewicht des Legierungspulvers, enthält.

10. Anodenmischung nach Anspruch 9, **dadurch gekennzeichnet, daß** sie 0,001-2 Gew.-% Ca, bezogen auf das Gewicht des Legierungspulvers, in Form einer Verbindung enthält.

11. Anodenmischung nach Anspruch 9 oder 10, **dadurch gekennzeichnet, daß** es sich bei der Calciumverbindung um Ca(OH)₂ oder CaO handelt.

12. Anodenmischung nach Anspruch 9, 10 oder 11, **dadurch gekennzeichnet, daß** das aluminiumhaltige Zinklegierungspulver neben SHG-Zink und Al mindestens eines der Elemente Pb, Bi, In und Ga enthält, wobei dessen Gehalt an Al und dem anderen Element bzw. den anderen Elementen im Bereich von 0,001 bis 0,5 Gew.-%, besonders bevorzugt von 0,002 bis 0,1 Gew.-% und noch weiter bevorzugt von 0,005 bis 0,1 Gew.-% liegt.

13. Anodenmischung nach Anspruch 12, **dadurch gekennzeichnet, daß** es sich bei den anderen Bestandteilen des Pulvers um unvermeidliche Verunreinigungen handelt.

14. Anodenmischung nach Anspruch 12 oder 13, **dadurch gekennzeichnet, daß** das Pulver frei von Quecksilber- , Cadmium-, Thallium- und Bleizusätzen ist.

15. Produkt zur Verwendung bei der Herstellung einer Zink-Alkali-Primärbatterie, umfassend ein aluminiumhaltiges Zinklegierungspulver, **dadurch gekennzeichnet, daß** es aus einer innigen Mischung des Legierungspulvers und einer pulverförmigen Calciumverbindung besteht, wobei die Mischung 0,001-2 Gew.-% Ca, bezogen auf das Gewicht des Legierungspulvers, in Form einer Verbindung enthält, wobei eine Mischung mit Calciumplumbat als Calciumverbindung ausgeschlossen ist.

16. Produkt nach Anspruch 15, **dadurch gekennzeichnet, daß** es sich bei der Calciumverbindung um Ca(OH)₂, CaO oder eine Calciumverbindung, die in dem Elektrolyt der Batterie weniger stabil ist als Ca(OH)₂, handelt.

17. Verfahren zur Herstellung einer Zink-Alkali-Primärbatterie, bei dem man:
a) eine gelierte Anodenmischung, die als Aktivmasse ein aluminiumhaltiges Zinklegierungspulver enthält, herstellt und
b) zwischen der Anodenmischung und einer Kathodenverbindung ein Separatorpapier vorsieht, **dadurch gekennzeichnet, daß** das Separatorpapier mindestens 0,001 Gew.-% Ca, bezogen auf das Gewicht des Legierungspulvers, enthält.

18. Verfahren nach Anspruch 17, **dadurch gekennzeichnet, daß** es sich bei der Calciumverbindung um Ca(OH)₂, CaO oder eine Calciumverbindung, die in dem Elektrolyt weniger stabil ist als Ca(OH)₂, handelt.

## Revendications

1. Procédé de fabrication d'une batterie alcaline au zinc primaire, qui comprend l'étape qui consiste à préparer un mélange d'anode alcalin gélifié qui contient une poudre d'alliage de zinc aluminifère comme matériau actif, **caractérisé en ce que** l'on utilise comme ingrédient du mélange d'anode une poudre de calcium en une quantité telle que le mélange d'anode contienne au moins 0,001 % en poids de Ca par rapport au poids de la poudre d'alliage, l'utilisation de plombate de calcium pour le composé de calcium étant exclue.

2. Procédé selon la revendication 1, **caractérisé en ce que** le mélange d'anode contient au moins 0,005 % en poids de Ca en tant que composé et de préférence en contient au moins 0,01 % en poids.

3. Procédé selon les revendications 1 ou 2, **caractérisé en ce que** le composé de calcium est utilisé en quantité telle que le mélange d'anode ne contient pas plus de 2 % en poids de Ca en tant que composé et de préférence n'en contient pas plus de 1 % en poids.

4. Procédé selon l'une quelconque des revendications 1 à 3, **caractérisé en ce que** le composé de calcium est utilisé en quantité telle que le mélange d'anode ne contient pas plus de 0,45 % en poids de Ca en tant que composé et de préférence n'en contient pas plus de 0,1 % en poids.

5. Procédé selon l'une quelconque des revendications 1 à 4, **caractérisé en ce que** le composé du calcium est Ca(OH)₂, CaO ou un composé de calcium moins stable que Ca(OH)₂ dans l'électrolyte.

6. Procédé selon l'une quelconque des revendications 1 à 5, **caractérisé en ce que** la poudre d'alliage de zinc aluminifère contient en plus de zinc SHG et d'Al au moins l'un des éléments Pb, Bi, In, Ga, sa teneur en Al et en le ou les autres éléments étant comprise entre 0,001 et 0,5 % en poids, de manière plus préférable entre 0,002 % en poids et 0,1 % en poids et de manière encore plus préférable entre 0,005 % en poids et 0,1 % en poids.

7. Procédé selon la revendication 6, **caractérisé en ce que** les autres constituants de la poudre sont des impuretés inévitables.

8. Procédé selon les revendications 6 ou 7, **caractérisé en ce qu'**aucun mercure, cadmium, thallium et plomb ne sont ajoutés à la poudre.

9. Mélange d'anode pour une batterie alcaline à zinc primaire, qui comprend une dispersion d'une poudre d'alliage de zinc aluminifère comme matériau actif dans un électrolyte alcalin gélifié, **caractérisé en ce que** l'électrolyte contient également un composé du calcium en quantité telle que le mélange d'anode contient au moins 0,001 % de Ca par rapport au poids de la poudre d'alliage.

10. Mélange d'anode selon la revendication 9, **caractérisé en ce qu'**il contient de 0,001 à 2 % en poids de Ca en tant que composé par rapport au poids de la poudre d'alliage.

11. Procédé selon les revendications 9 ou 10, **caractérisé en ce que** le composé de calcium est Ca(OH)₂ ou CaO.

12. Mélange d'anode selon les revendications 9, 10 ou 11, **caractérisé en ce que** la poudre d'alliage de zinc aluminifère contient en plus de zinc SHG et d'Al au moins l'un des éléments Pb, Bi, In, Ga, sa teneur en Al et en le ou les autres éléments étant comprise entre 0,001 et 0,5 % en poids, de manière plus préférable entre 0,002 % en poids et 0,1 % en poids et de manière encore plus préférable entre 0,005 % en poids et 0,1 % en poids.

13. Mélange d'anode selon la revendication 12, **caractérisé en ce que** les autres constituants de la poudre sont des impuretés inévitables.

14. Procédé selon les revendications 12 ou 13, **caractérisé en ce qu'**aucun mercure, cadmium, thallium et plomb ne sont ajoutés à la poudre.

15. Produit destiné à être utilisé dans la fabrication d'une batterie alcaline au zinc primaire, ledit produit comprenant une poudre d'alliage de zinc aluminifère, **caractérisé en ce qu'**il est constitué d' un mélange intime de ladite poudre d'alliage et d'une poudre de composé de calcium, le mélange contenant de 0,001 à 2 % en poids de Ca en tant que composé par rapport au poids de la poudre d'alliage, un mélange contenant du plombate de calcium comme composé du calcium étant exclu.

16. Produit selon la revendication 15, **caractérisé en ce que** le composé de calcium est Ca(OH)₂, CaO ou un composé de calcium moins stable que Ca(OH)₂ dans l'électrolyte.

17. Procédé de fabrication d'une batterie alcaline au zinc primaire, qui comprend les étapes qui consistent à :
a) préparer un mélange d'anode alcalin gélifié qui contient une poudre d'alliage de zinc aluminifère comme matériau actif et
b) prévoir un papier de séparation entre le mélange d'anode et un composé de cathode, **caractérisé en ce que** le papier de séparation contient un composé du calcium en quantité telle que le papier de séparation contient au moins 0,001 % en poids de Ca par rapport au poids de la poudre d'alliage.

18. Procédé selon la revendication 17, **caractérisé en ce que** le composé de calcium est Ca(OH)₂, CaO ou un composé de calcium moins stable que Ca(OH)₂ dans l'électrolyte.
